# EUROPEAN PATENT APPLICATION

(11) **EP 3 206 374 A1**
(43) Date of publication of application: **16.08.2017**
(21) Application number: 17153309.4
(22) Date of filing: 26.01.2017
(51) Int. Cl.: H04L 29/08

(54) **TERMINAL PRESENCE AND AVAILABILITY MANAGEMENT**

(30) Priority: 09.02.2016 JP 2016022796
(71) Applicant: Ricoh Company, Ltd., Tokyo 143-8555 (JP)
(72) Inventor: HASEGAWA, Takashi, Tokyo, 143-8555 (JP); HOMMA, Takeshi, Tokyo, 143-8555 (JP); SHIRO, Hideki, Tokyo, 143-8555 (JP)
(74) Representative: Schwabe - Sandmair - Marx

(57) **Abstract**

A server apparatus (50) includes: a storage unit (5000) that stores, for each terminal (10, 20, 130), presence information including state information indicating a state of a terminal (10, 20, 130) and available terminal information indicating an available terminal that is usable from the terminal (10, 20, 130); a communication unit (51) that receives, from a first terminal (10, 20, 130), the presence information of the first terminal (10, 20, 130); and a state management unit (53) that updates the presence information of the first terminal (10, 20, 130) stored in the storage unit (5000) upon receiving the presence information of the first terminal (10, 20, 130) from the first terminal (10, 20, 130).

## Description

### BACKGROUND OF THE INVENTION

### 1. Field of the Invention

The present invention relates to a server apparatus and a transmission system.

### 2. Description of the Related Art

With growth of cloud computing, various types of apparatuses are used as client terminals of a cloud service. Examples of a client terminal used for the cloud service include a smartphone, a tablet terminal, a television, a video conference terminal, and an electronic whiteboard having a touch screen. Consequently, there are many situations in which, when a certain client terminal uses a service, another client terminal which can use the same type of service is present around the certain client terminal. A technique of allowing another client terminal such as a shared terminal to use the service temporarily is conventionally known. When another client terminal is allowed to use the service temporarily, users can use the service more conveniently since the service in use can be used in a higher quality state and a new function unique to a terminal can be used.

Japanese Unexamined Patent Application Publication No. 2015-162205 discloses an invention in which the type of data usable by a subject terminal is notified to a destination terminal so that users can perform a terminal setting process appropriately without waste before starting communication.

However, in the conventional technique, when a plurality of client terminals has become available for use by a communication counterpart user, the communication counterpart user cannot know that the plurality of client terminals is usable.

In view of the above-described problem, there is a need to provide a server apparatus and a transmission system capable of informing a communication counterpart user of the fact that a plurality of client terminals is usable.

### SUMMARY OF THE INVENTION

According to exemplary embodiments of the present invention, there is provided a server apparatus comprising: a storage unit that stores, for each terminal, presence information including state information indicating a state of a terminal and available terminal information indicating an available terminal that is usable from the terminal; a communication unit that receives, from a first terminal, the presence information of the first terminal; and a state management unit that updates the presence information of the first terminal stored in the storage unit upon receiving the presence information of the first terminal from the first terminal.

Exemplary embodiments of the present invention also provide a transmission system comprising: a server apparatus; and a plurality of terminal, wherein the server apparatus includes: a storage unit that stores, for each terminal, presence information including state information indicating a state of a terminal and available terminal information indicating an available terminal that is usable from the terminal; a server communication unit that receives, from a first terminal, the presence information of the first terminal; and a state management unit that updates the presence information of the first terminal stored in the storage unit upon receiving the presence information of the first terminal from the first terminal, and the first terminal includes a terminal communication unit that transmits the presence information of the first terminal.

### BRIEF DESCRIPTION OF THE DRAWINGS

FIG. 1 is a schematic diagram illustrating an example of an apparatus configuration of a transmission system according to an embodiment;
FIG. 2 is a diagram illustrating an example of a hardware configuration of a terminal dedicated for television conference according to the embodiment;
FIG. 3 is a diagram illustrating an example of hardware configuration of a general-purpose terminal according to the embodiment;
FIG. 4 is a diagram illustrating an example of a hardware configuration of a server apparatus according to the embodiment;
FIG. 5 is a diagram illustrating an example of a hardware configuration of a terminal having a recording function and a display function according to the embodiment;
FIG. 6 is a diagram illustrating an example of a functional configuration of a transmission system according to the embodiment;
FIG. 7 is a diagram illustrating an example of an authentication management table according to the embodiment;
FIG. 8A is a diagram illustrating a first example of a terminal management table according to the embodiment;
FIG. 8B is a diagram illustrating a second example of the terminal management table according to the embodiment;
FIG. 9 is a diagram illustrating an example of a destination list management table according to the embodiment;
FIG. 10 is a diagram illustrating an example of a destination list including presence information according to the embodiment;
FIG. 11 is a sequence diagram illustrating a first example of a presence information update method according to the embodiment;
FIG. 12 is a sequence diagram illustrating a second example of the presence information update method according to the embodiment; and
FIG. 13 is a sequence diagram illustrating a third example of the presence information update method according to the embodiment.

The accompanying drawings are intended to depict exemplary embodiments of the present invention and should not be interpreted to limit the scope thereof. Identical or similar reference numerals designate identical or similar components throughout the various drawings.

### DESCRIPTION OF THE EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

Hereinafter, an embodiment of a server apparatus and a transmission system will be described in detail with reference to the accompanying drawings.

### Device configuration of transmission system

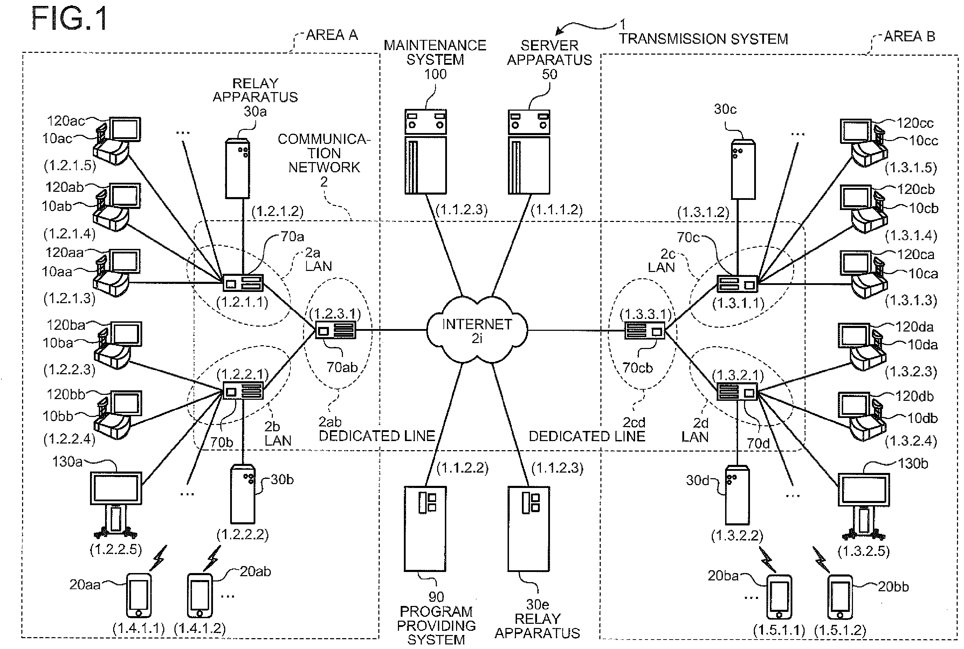

FIG. 1 is a schematic diagram illustrating an example of an apparatus configuration of a transmission system 1 according to an embodiment. First, an outline of the transmission system 1 according to the present embodiment will be described with reference to FIG. 1.

Examples of the transmission system 1 include a data providing system that provides content data unidirectionally from one terminal to the other terminal via a server apparatus and a communication system that transfers information, emotions, and the like between a plurality of terminals via a server apparatus. This communication system is a system for transferring information, emotions, and the like between a plurality of client terminals (corresponding to "terminals") via a communication management system (corresponding to a "server apparatus"). Specifically, examples of the communication system include a television conference system, a video telephone system, an audio conference system, an audio telephone system, and a personal computer (PC) screen sharing system.

In the description of the present embodiment, a case in which the transmission system 1 is a television conference system will be described as an example.

The transmission system 1 according to the embodiment includes terminals (10aa, 10ab, ...), displays (120aa, 120ab, ...) for the terminals (10aa, 10ab, ...), terminals (20aa, 20ab, ...), terminals (130a, 130b), relay apparatuses (30a, 30b, 30c, 30d, 30e), a server apparatus 50, a program providing system 90, and a maintenance system 100.

The terminals (10aa, 10ab, ...) are terminals dedicated for television conference. The terminals (20aa, 20ab, ...) are general-purpose terminals such as a smart device. The terminals (130a, 130b) are terminals having a display function and a recording function such as an electronic whiteboard.

The terminal 130 displays data created by a user using a personal computer or the like and receives writings on the displayed data. Moreover, the data displayed on the terminal 130 and the information written to the displayed data can be shared between other terminals 130 connected to the transmission system 1. Furthermore, the terminal 130 can be also used as the display of the terminals 10 and 20.

In the present embodiment, a "terminal 10" is used to indicate an arbitrary terminal among the terminals (10aa, 10ab, ...), and a "terminal 20" is used to indicate an arbitrary terminal among the terminals (20aa, 20ab, ...). Moreover, a "display 120" is used to indicate an arbitrary display among the displays (120aa, 120ab, ...). Furthermore, a "terminal 130" is used to indicate an arbitrary terminal between the terminals (130a, 130b). Furthermore, a "relay apparatus 30" is used to indicate an arbitrary relay apparatus among the relay apparatuses (30a, 30b, 30c, 30d, 30e).

Each of the terminal 10, 20, and 130 transmits and receives various items of information between other apparatuses.

For example, the terminal 10, 20, or 130 establishes a session with other terminals 10 and 20 and makes a call by transmitting and receiving content data including audio data and image data in the established session. In this way, in the transmission system 1, a television conference can be performed between the plurality of terminals 10 and 20.

For example, the terminal 130 establishes a session with other terminals 130, and transmits and receives display information in the established session. In this way, in the transmission system 1, display information can be shared between the plurality of terminals 130.

Hereinafter, "image data and audio data" will be expressed as "content data". The data transmitted between the terminals 10 and 20 is not limited to the present embodiment. As another example, the content data may be text data. As still another example, the content data may include text data in addition to audio data and image data. Moreover, the image data may be a video image and may be a still image. Furthermore, the image data may include both video image and still image.

In the transmission system 1 of the present embodiment, upon receiving an operation to start communication from a user, each of the terminal 10, 20, and 130 transmits start request information to the server apparatus 50.

Here, the start request information is information that requests the start of communication and includes information that designates the other terminal 10, 20, or 130 as a communication counterpart. Hereinafter, each of the terminal 10, 20, and 130 that transmits the start request information is referred to as start requesting terminals. Moreover, the other terminal 10, 20, or 130 designated as a communication counterpart is referred to as a destination terminal. Specifically, the start request information includes information indicating the request to start communication, a terminal ID for identifying the start requesting terminal, and a terminal ID for identifying the destination terminal.

The destination terminal may be one of the terminal 10, 20, and 130 and may be two or more of the terminals 10, 20, and 130. That is, the transmission system 1 can realize a television conference or the like using the session established among three or more of the terminals 10, 20, and 130 as well as between two of the terminals 10, 20, and 130.

The server apparatus 50 manages the terminals 10, 20, and 130 and the relay apparatus 30 in an integrated manner. Upon receiving the start request information from the terminals 10 and 20, for example, the server apparatus 50 establishes a session based on the start request information to realize a television conference by making a call or the like between the terminals 10 and 20. Moreover, upon receiving the start request information from the terminal 130, for example, the server apparatus 50 establishes a session based on the start request information to realize a display information sharing function between a plurality of terminals 130.

A plurality of routers (70a, 70b, 70c, 70d, 70ab, and 70cd) selects an optimal path of the content data. In the present embodiment, a "router 70" is used to indicate an arbitrary router among the routers (70a, 70b, 70c, 70d, 70ab, and 70cd).

The relay apparatus 30 relays the content data between the plurality of terminals 10 and 20, for example. Moreover, the relay apparatus 30 relays the display information between the plurality of terminals 130.

The program providing system 90 includes a hard disk (HD) in which a terminal program for allowing the terminals 10, 20, and 130 to realize various functions. The program providing system 90 can transmit the terminal program to the terminals 10, 20, and 130. Moreover, a relay apparatus program for allowing the relay apparatus 30 to realize various functions is also stored in the HD of the program providing system 90, and the program providing system 90 is possible to transmit the relay apparatus program to the relay apparatus 30. Furthermore, a transmission management program for allowing the server apparatus 50 to realize various functions is also stored in the HD of the program providing system 90, and the program providing system 90 is possible to transmit the transmission management program to the server apparatus 50.

The maintenance system 100 is a computer for maintaining, managing, or repairing at least one of the terminals 10, 20, and 130, the relay apparatus 30, the server apparatus 50, and the program providing system 90. Moreover, the maintenance system 100 performs maintenance to manage a model number, a serial number, a sales contact, repair and checkup, or failure history of at least one of the terminals 10, 20, and 130, the relay apparatus 30, the server apparatus 50, and the program providing system 90.

The terminals (10aa, 10ab, 10ac, 10a, ...), the relay apparatus 30a, and the router 70a are communicably connected by a LAN 2a. The terminals (10ba, 10bb, 10bc, 10b, ..., 20aa, 20ab, ...), the terminal (130a), the relay apparatus 30b, and the router 70b are communicably connected by a LAN 2b. Moreover, the LANs 2a and 2b are communicably connected by a dedicated line 2ab in which a router 70ab is included and are constructed in a predetermined area A. For example, the area A is Japan, the LAN 2a is constructed in an office in Tokyo, and the LAN 2b is constructed in an office in Osaka.

On the other hand, the terminals (10ca, 10cb, 10cc, 10c, ...), the relay apparatus 30c, and the router 70c are communicably connected by a LAN 2c. The terminals (10da, 10db, 10dc, 10d, ...), the terminal (130b), the relay apparatus 30d, and the router 70d are communicably connected by a LAN 2d. Moreover, the LANs 2c and 2d are communicably connected by a dedicated line 2cd in which a router 70cd is included and are constructed in a predetermined area B. For example, the area B is America, the LAN 2c is constructed in an office in New York, and the LAN 2d is constructed in an office in Washington D.C. The areas A and B are communicably connected via the Internet 2i from the routers (70ab, 70cd).

The server apparatus 50 and the program providing system 90 are communicably connected to the terminals 10, 20, and 130 and the relay apparatus 30 via the Internet 2i. The server apparatus 50 and the program providing system 90 may be provided in the area A or B and may be provided in an area other than these areas.

A relay apparatus 30e is communicably connected to the terminals 10, 20, and 130 via the Internet 2i. The relay apparatus 30e operates all times and is provided in an area other than these areas so that the relay apparatus 30e is not easily influenced by the communication amount in a local area of the area A or B. Due to this, the relay apparatus 30e is used as a relay apparatus for relaying the content data when the terminals 10, 20, and 130 make a call with a terminal provided in another local area. Moreover, the relay apparatus 30e is used as an emergency relay apparatus when a call is made between terminals in the same local area and a relay apparatus provided in the local area is not working.

In the present embodiment, a communication network 2 of the present embodiment is constructed by the LANs 2a and 2b, the dedicated line 2ab, the Internet 2i, the dedicated line 2cd, and the LANs 2c and 2d. The communication network 2 may have a position at which communication is performed wirelessly as well as via cables.

In FIG. 1, four numbers appearing below the terminals 10, 20, and 130, the relay apparatuses 30, the server apparatus 50, the routers 70, the program providing system 90, and the maintenance system 100 are simplified representations of IP addresses in the general IPv4 format. For example, the IP address of the terminal 10aa is "1.2.1.3". The IPv4 format is used herein to simplify the description although the IPv6 format may be used instead of the IPv4 format.

Hardware configuration of terminal dedicated for television conference

Next, an example of a hardware configuration of the terminal dedicated for television conference according to the present embodiment will be described.

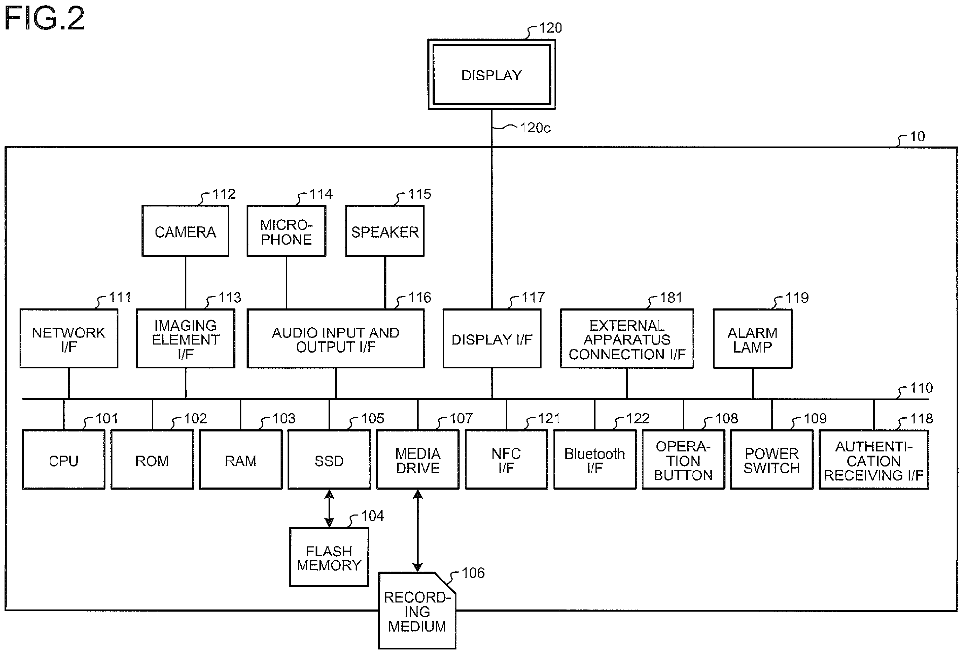

FIG. 2 is a diagram illustrating an example of a hardware configuration of the terminal dedicated for television conference 10 according to the embodiment. As illustrated in FIG. 2, the terminal 10 of the present embodiment includes a central processing unit (CPU) 101 that controls an overall operation of the terminal 10, a read only memory (ROM) 102 that stores the terminal program, a random access memory (RAM) 103 that is used as a work area of the CPU 101, a flash memory 104 that stores various items of data such as image data or audio data, a solid state drive (SSD) 105 that controls read or write of various items of data in relation to the flash memory 104 according to the control of the CPU 101, a media drive 107 that controls read or write (storage) of data in relation to a recording medium 106 such as a flash memory, an operation button 108 operated, for example, when selecting a destination of the terminal 10, a power switch 109 for switching on and off the power of the terminal 10, a network interface (I/F) 111 for transmitting data using the communication network 2 to be described later, and an authentication receiving I/F 118.

The terminal 10 includes a built-in camera 112 that images a subject to obtain image data according to the control of the CPU 101, an imaging element I/F 113 that controls the driving of the camera 112, a built-in microphone 114 that inputs audio, a built-in speaker 115 that outputs audio, an audio input and output I/F 116 that processes the input and output of audio signals between the microphone 114 and the speaker 115 according to the control of the CPU 101, a display I/F 117 that transmits image data to an external display 120 according to the control of the CPU 101, an external apparatus connection I/F 181 for connecting various external apparatuses, an alarm lamp 119 that informs abnormalities of various functions of the terminal 10, and a bus line 110 such as an address bus or a data bus for electrically connecting the respective constituent elements.

The terminal 10 may further include an NFC I/F 121 and a Bluetooth (registered trademark) I/F 122. The NFC I/F 121 is a communication interface compatible with near field communication (NFC) (ISO/IEC 18092 or the like) which is one of international near-field radio communication standards for performing near-field data communication. The Bluetooth I/F 122 is a communication interface compatible with Bluetooth (registered trademark) (IEEE 802.15.1 and the like) which is standardized as one of short-range radio communication techniques.

The display 120 is a display unit configured as a liquid-crystal or organic EL that displays a subject image, an operation icon, and the like. Moreover, the display 120 is connected to the display I/F 117 by a cable 120c. This cable 120c may be an analog RGB (VGA) signal cable, may be a component video cable, and may be a high-definition multimedia interface (HDMI: registered trademark) or digital video interactive (DVI) signal cable.

The camera 112 includes a lens and a solid-state imaging element that converts light to charge to digitalize a subject image (video), and a complementary metal oxide semiconductor (CMOS), a charge coupled device (CCD), and the like are used as the solid-state imaging element.

External apparatuses such as an external camera, an external microphone, and an external speaker can be electrically connected to the external apparatus connection I/F 181 by a universal serial bus (USB) cable or the like. When an external camera is connected, the external camera is driven more preferentially than the built-in camera 112 according to the control of the CPU 101. Similarly, when an external microphone and an external speaker are connected, the external microphone and the external speaker are driven more preferentially than the built-in microphone 114 and the built-in speaker 115, respectively, according to the control of the CPU 101.

The recording medium 106 is configured to be detachably attached to the terminal 10. Moreover, a memory such as an electrically erasable and programmable ROM (EEPROM) may be used without being limited to the flash memory 104 as long as the memory is a nonvolatile memory that reads or writes data according to the control of the CPU 101.

Furthermore, the terminal program may be distributed in a state of being recorded on a computer-readable recording medium (the recording medium 106 or the like) in an installable or executable file. Moreover, the terminal program may be stored in the ROM 102 rather than the flash memory 104.

### Hardware configuration of general-purpose terminal

Next, an example of a hardware configuration of the general-purpose terminal 20 according to the present embodiment will be described.

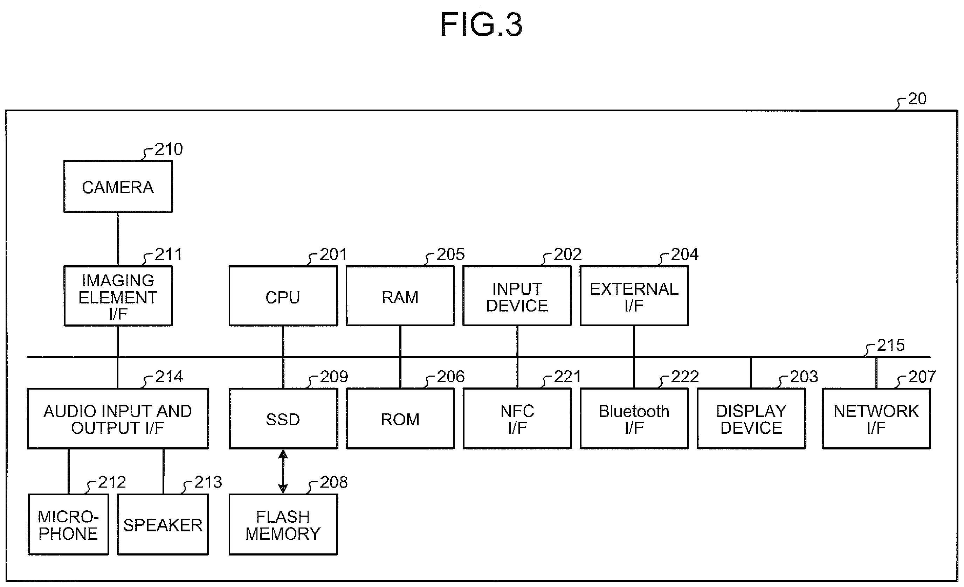

FIG. 3 is a diagram illustrating an example of a hardware configuration of the general-purpose terminal 20 according to the embodiment. As illustrated in FIG. 3, the terminal 20 of the present embodiment includes a CPU 201 that controls an overall operation of the terminal 20, an input device 202 for inputting various operation signals to the terminal 20, a display device 203 for displaying the processing results of the terminal 20, an external I/F 204 which is an interface for various external apparatuses such as an external microphone, an external camera, or an external recording medium, a RAM 205 used as a work area of the CPU 201, a ROM 206 in which a program or data such as the setting of an OS of the terminal 20 or a network setting is stored, a network I/F 207 for transmitting data using a mobile telephone communication network or the Internet, a flash memory 208 that stores various items of data such as a terminal program, and a SSD 209 that controls read or write of various items of data in relation to the flash memory 208 according to the control of the CPU 201.

The terminal 20 further includes a built-in camera 210 that images a subject to obtain image data according to the control of the CPU 201, an imaging element I/F 211 that controls the driving of the camera 210, a built-in microphone 212 that inputs audio, a built-in speaker 213 that outputs audio, an audio input and output I/F 214 that processes the input and output of audio signals between the microphone 212 and the speaker 213 according to the control of the CPU 201, and a bus line 215 such as an address bus or a data bus for electrically connecting the respective constituent elements. When the terminal 20 is a terminal that uses a text chatting service only, the camera 210, the microphone 212, the speaker 213, or the like may not be provided.

The terminal 20 may include any one of an NFC I/F 221 and a Bluetooth I/F 222 or both.

A memory such as an EEPROM may be used without being limited to the flash memory 208 as long as the memory is a nonvolatile memory that reads or writes data according to the control of the CPU 201.

The terminal program may be distributed in a state of being recorded on a computer-readable recording medium in an installable or executable file. Moreover, the terminal program may be stored in the ROM 206 rather than the flash memory 208.

### Hardware configuration of server apparatus

Next, an example of a hardware configuration of the server apparatus 50 according to the present embodiment will be described.

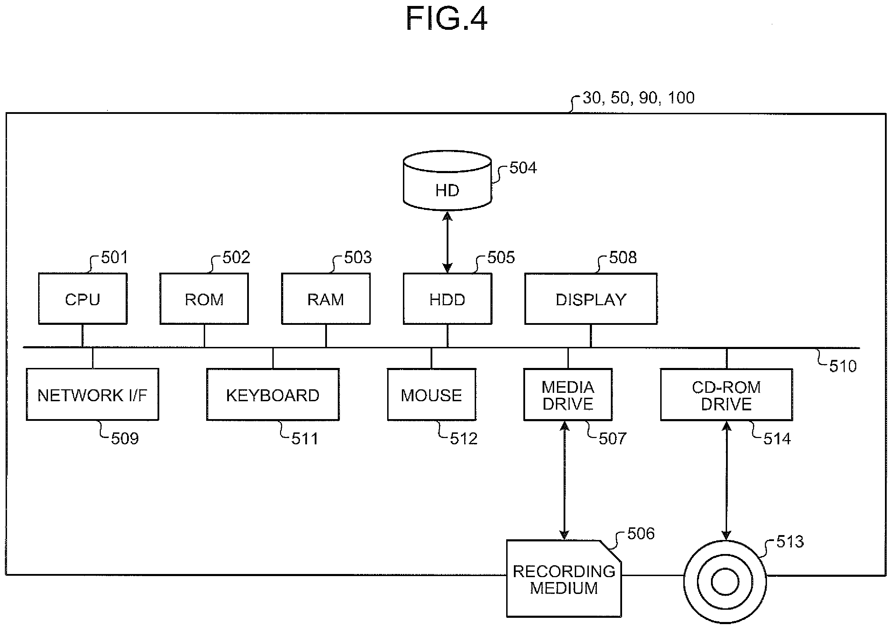

FIG. 4 is a diagram illustrating an example of a hardware configuration of the server apparatus 50 according to the embodiment. The server apparatus 50 includes a CPU 501 that controls an overall operation, a ROM 502 that stores the transmission management program, a RAM 503 used as a work area of the CPU 501, a hard disk (HD) 504 that stores various items of data, a hard disk drive (HDD) 505 that controls read or write of various items of data in relation to the HD 504 according to the control of the CPU 501, a media drive 507 that controls read or write (storage) of data in relation to the recording medium 506 such as a flash memory, a display 508 that displays various items of information such as a cursor, a menu, a window, a character, or an image, a network I/F 509 for transmitting data using the communication network 2 to be described later, a keyboard 511 having a plurality of keys for inputting characters, numerical values, and various instructions, a mouse 512 used for selecting and executing various instructions, selecting a processing target, and moving a cursor, a CD-ROM drive 514 that controls read or write of data in relation to a compact disc read only memory (CD-ROM) 513 as an example of a removable recording medium, and a bus line 510 such as an address bus or a data bus for electrically connecting the respective constituent elements.

The transmission management program may be distributed in a state of being recorded on a computer-readable recording medium such as the recording medium 506 or the CD-ROM 513 in an installable or executable file.

Since the relay apparatus 30 has the same hardware configuration as the server apparatus 50, the description thereof will not be provided. However, a relay apparatus program for controlling the relay apparatus 30 is recorded on the ROM 502. In this case, the relay apparatus program may be distributed in a state of being recorded on a computer-readable recording medium such as the recording medium 506 or the CD-ROM 513 in an installable or executable file.

Since the program providing system 90 has the same hardware configuration as the server apparatus 50, the description thereof will not be provided. However, a program providing program for controlling the program providing system 90 is recorded on the ROM 502. In this case, the program providing program may be distributed in a state of being recorded on a computer-readable recording medium such as the recording medium 506 or the CD-ROM 513 in an installable or executable file.

Since the maintenance system 100 has the same hardware configuration as the server apparatus 50, the description thereof will not be provided. However, a maintenance program for controlling the maintenance system 100 is recorded on the ROM 502. In this case, the maintenance program may be distributed in a state of being recorded on a computer-readable recording medium such as the recording medium 506 or the CD-ROM 513 in an installable or executable file.

As another example of the removable recording medium, the program may be provided in a state of being recorded on a computer-readable recording medium such as a compact disc recordable (CD-R), a digital versatile disk (DVD), or a bluray disc.

Hardware configuration of terminal having recording and display functions

Next, an example of a hardware configuration of the terminal 130 according to the present embodiment will be described.

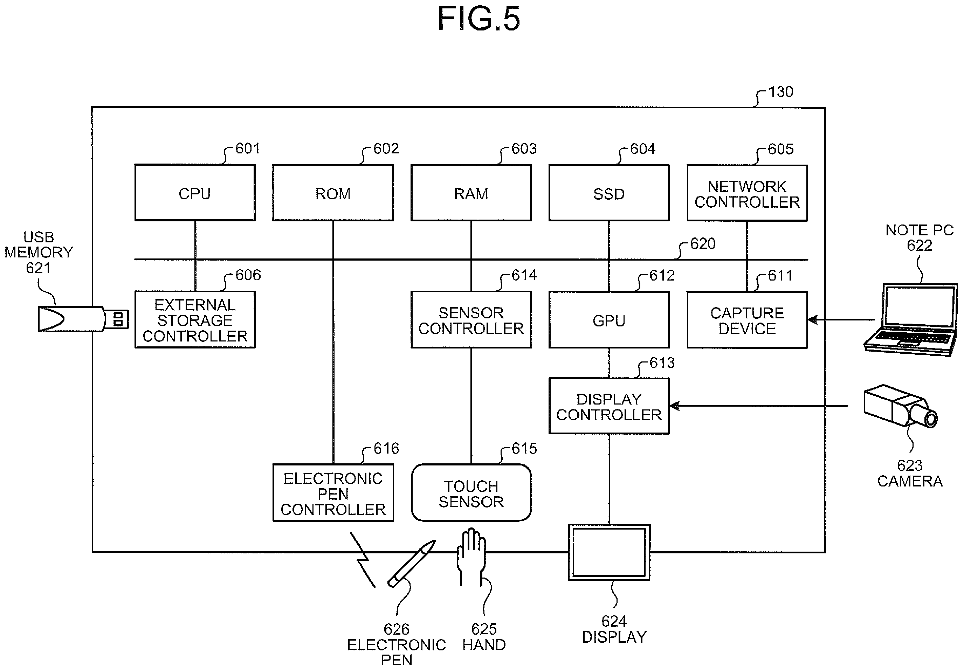

FIG. 5 is a diagram illustrating an example of a hardware configuration of the terminal, 130 having a recording function and a display function according to the embodiment. The terminal 130 of the embodiment includes a CPU 601 that controls an overall operation of the terminal 130, a ROM 602 that stores a program such as an initial program loader (IPL) used for driving the CPU 601, a RAM 603 used as a work area of the CPU 601, a SSD 604 that stores various items of data such as a program for the terminal 130, a network controller 605 that controls communication with the communication network 2, and an external storage controller 606 that controls communication with a USB memory 621.

The terminal 130 further includes a capture device 611, a graphics processing unit (GPU) 612, and a display controller 613. The capture device 611 acquires video information displayed on the display of a note PC 622 as a still image or a video image. The GPU 612 processes graphics exclusively. The display controller 613 controls and manages screen display to output an output image from the GPU 612 to the display 624 or the like. Moreover, the display controller 613 performs display control to output the video input from the camera 623 to the display 624.

The terminal 130 further includes a touch sensor 615 that detects a touch of an electronic pen 626 or a user's hand 625 on the display 624 and a sensor controller 614 that controls the processing of the touch sensor 615. The touch sensor 615 inputs and detects a coordinate according to an infrared-ray screening method. The coordinate is input and detected according to a method in which two light emitting and receiving devices (not illustrated) provided at both upper ends of the display 624 radiate a plurality of infrared rays in parallel to the display 624 so that the infrared rays are reflected by a reflecting member provided around the display 624 and the light receiving element receives light returning along the same path as the path of the radiated light. The touch sensor 615 outputs the IDs (identifications) of the infrared rays radiated by the two light receiving and emitting apparatuses, blocked by an object to the sensor controller 614 and the sensor controller 614 specifies the coordinate position which is the contact position of the object.

Various detection means may be used as the touch sensor 615 without being limited to the infrared ray screening method. Examples of the detection means include an electrostatic capacitance-type touch panel that specifies a touch position by detecting a change in electrostatic capacitance, a resistance film-type touch panel that specifies a touch position according to a change in voltage between two facing resistance films, and an electromagnetic induction-type touch panel that specifies a touch position by detecting electromagnetic induction occurring when a contacting object makes content with a display unit.

The terminal 130 further includes an electronic pen controller 616. The electronic pen controller 616 determines the presence of a touch of a pen tip or a pen bottom on the display 624 by communicating with the electronic pen 626. The electronic pen controller 616 may determine the presence of a touch of a portion gripped by the user of the electronic pen 626 and the other portions of the electronic pen as well as the pen tip or the pen bottom of the electronic pen 626.

The terminal 130 further includes a bus line 620 such as an address bus or a data bus for electrically connecting the CPU 601, the ROM 602, the RAM 603, the SSD 604, the network controller 605, the external storage controller 606, the capture device 611, the GPU 612, the sensor controller 614, and the electronic pen controller 616 as illustrated in FIG. 5.

### Functional configuration of transmission system

Next, an example of a functional configuration of the transmission system 1 according to the present embodiment will be described.

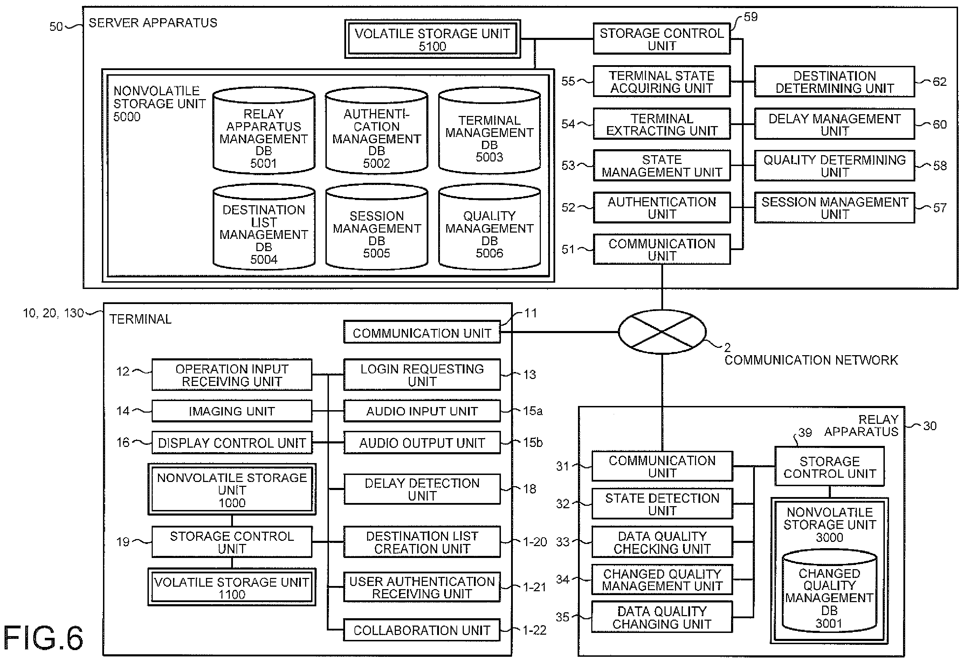

FIG. 6 is a diagram illustrating an example of a functional configuration of the transmission system 1 according to the embodiment. In FIG. 6, the terminals 10, 20, and 130, the relay apparatus 30, and the server apparatus 50 are connected so as to be able to perform data communication via the communication network 2. Moreover, the program providing system 90 and the maintenance system 100 illustrated in FIG. 1 are not illustrated in FIG. 6.

### Functional configuration of terminal

The terminals 10, 20, and 130 of the embodiment each include a communication unit 11, an operation input receiving unit 12, a login requesting unit 13, an imaging unit 14, an audio input unit 15a, an audio output unit 15b, a display control unit 16, a delay detection unit 18, a storage control unit 19, a destination list creation unit 1-20, a user authentication receiving unit 1-21, and a collaboration unit 1-22. These respective units are functions realized when any one of the respective constituent elements illustrated in FIGS. 2, 3, and 5 operates according to a command from the CPU 101 (201, 601) according to the program stored in the ROM 102 (206, 602). Moreover, the terminals 10, 20, and 130 each include a volatile storage unit 1100 constructed by the RAM 103 (205, 603) and a nonvolatile storage unit 1000 constructed by the flash memory 104 (208), the SSD 604, or the like.

Next, the respective units of the terminals 10, 20, and 130 will be described in detail.

The communication units 11 of the terminals 10 and 20 are realized by the network I/Fs 111 and 207. Moreover, the communication unit 11 of the terminal 130 is realized by the network controller 605. The communication units 11 of the terminals 10, 20, and 130 transmit and receive data to and from other terminals, apparatuses, or systems via the communication network 2.

The communication unit 11 transmits presence information of a subject terminal to the server apparatus 50 and receives presence information of other terminals from the server apparatus 50, for example.

The presence information includes state information indicating the state of the terminal 10 (20, 130) and available terminal information indicating available terminals that are usable from the terminal 10 (20, 130).

The state information indicates operating states (online or offline) of the terminals 10, 20, and 130. The state information may be defined more finely. For example, the online state may be further classified by a communication state such as a calling state and a standby state. Moreover, a state in which a communication cable is removed, a state in which audio can be output but images cannot be output, and a state (MUTE) in which it is set such that audio is not output may be also defined.

The communication unit 11 transmits the presence information of a subject apparatus to the server apparatus 50 when a state of the subject apparatus changes from offline to online, for example. Moreover, the communication unit 11 receives the presence information of the terminals 10, 20, and 130 displayed as destination terminal candidates from the server apparatus 50 before establishing a session with the other terminals 10, 20, and 130.

The destination terminal candidate indicates a terminal that the terminals 10, 20, and 130 can designate as a communication counterpart. That is, the terminals 10, 20, and 130 cannot establish a session with a terminal which is not set as a destination terminal candidate.

When a terminal operates as a start requesting terminal of a television conference, for example, the communication unit 11 transmits the start request information including a terminal ID for identifying the terminal 10 (20) selected from the destination terminal candidate to the server apparatus 50.

The user authentication receiving unit 1-21 receives user authentication information input from the authentication receiving I/F 118.

The operation input receiving unit 12 of the terminal 10 is realized by the operation button 108 and the power switch 109 and receives various items of information input by a user. For example, when a user turns on the power switch 109, the operation input receiving unit 12 receives a power-ON instruction and turns the power on. The operation input receiving unit 12 of the terminal 20 is realized by the input device 202. The operation input receiving unit 12 of the terminal 130 is realized by the sensor controller 614, the touch sensor 615, the electronic pen controller 616, and the like.

The login requesting unit 13 is realized by a command from the CPU 101 and automatically transmits login request information indicating the request for login and a current IP address of the terminal 10 from the communication unit 11 to the server apparatus 50 via the communication network 2 upon receiving the power-ON instruction. Moreover, when the user switches the power switch 109 from the ON state to the OFF state, the communication unit 11 transmits state information indicating the power-OFF state to the server apparatus 50, and then, the operation input receiving unit 12 turns the power off completely. In this way, the server apparatus 50 can understand that the terminal 10 is changed from the power-ON state to the power-off state.

The imaging unit 14 is realized by the commands from the CPUs 101 and 201, the cameras 112 and 210, and the imaging element I/Fs 113 and 211 and images a subject to output image data obtained by the imaging. The audio input unit 15a is realized by the audio input and output I/Fs 116 and 214, and after the voice of a user is converted to an audio signal by the microphones 114 and 212, audio data of the audio signal is input to the audio input unit 15a. The audio output unit 15b is realized by the command from the CPUs 101 and 201 and the audio input and output I/Fs 116 and 214 and outputs the audio signal of audio data to the speakers 115 and 213 so that audio is output from the speakers 115 and 213.

The display control unit 16 of the terminals 10 and 20 is realized by the display I/F 117 and the like and performs control for transmitting image data to the external display 120 (the display device 203). The display control unit 16 of the terminal 130 is realized by the capture device 611, the GPU 612, the display controller 613, and the like. The display control unit 16 displays a destination list to be described later on the display 120 (the display device 203 and the display 624), for example. The display control unit 16 of the terminal 130 performs a display control process of displaying input information input by the user so as to be superimposed on the display information acquired from the note PC 622 or the like.

The delay detection unit 18 is realized by the command from the CPUs 101 and 201 and detects a delay (ms) of image data or audio data transmitted from the other terminals 10 and 20 via the relay apparatus 30.

The storage control unit 19 is realized by the command from the CPUs 101 and 201 and the SSDs 105 and 209 as an example and performs processes of storing various items of data in the nonvolatile storage unit 1000 and reading various items of data stored in the nonvolatile storage unit 1000. The terminal IDs (identifications) for identifying the terminals 10 and 20, a password, and the like are stored in the nonvolatile storage unit 1000. Furthermore, the storage control unit 19 performs processes of storing various items of data in the volatile storage unit 1100 and reading various items of data stored in the volatile storage unit 1100. The content data received when making a call with a destination terminal is overwritten and stored in the volatile storage unit 1100 whenever the data is received. In this case, an image is displayed on the display 120 and the display device 203 according to the image data before being overwritten and audio is output from the speakers 115 and 213 according to the audio data before being overwritten.

The destination list creation unit 1-20 creates a destination list. The destination list includes the destination terminal candidate and the presence information of the destination terminal candidate.

The collaboration unit 1-22 controls processes associated with collaboration between the terminals 10, 20, and 130. The collaboration unit 1-22 improves user's convenience by enabling the terminals 10, 20, and 130 to collaborate with each other.

For example, the general-purpose terminal 20 can perform a television conference by making and receiving a call similarly to the terminal dedicated for television conference 10. However, the performance of the camera, the display, the speaker, and the like of the general-purpose terminal 20 is generally poor than the terminal 10. Moreover, when a plurality of persons performs a television conference using a conference room or the like, it is more convenient to use the terminal 130 such as an electronic whiteboard than using the display screen of the general-purpose terminal 20. Therefore, the collaboration unit 1-22 can improve the convenience of the user of the terminal 10 by enabling the terminals 10, 20, and 130 to collaborate with each other.

The collaboration unit 1-22 performs control to start a television conference with the terminal 10 according to an instruction from the terminal 20 when the terminal 20 is correlated (paired) with a certain terminal 10 according to a user's operation, for example, and there is an incoming call from a counterpart to the terminal 20. Moreover, when there is an outgoing call based on a destination list (address book) from the terminal 20, the collaboration unit 1-22 performs control to correlate (pair) the terminal 20 with a certain terminal 10 according to the user's operation, make a call from the terminal 10 to a counterpart, and start a television conference.

When the terminals 10 and 130 are enabled to be used using a personal account of the user of the terminal 10, there is a risk that the destination list of the user of the terminal 10 is revealed to third party's eyes and the third party performs an illegal operation using the personal account of the user. Therefore, the collaboration unit 1-22 controls the collaboration process so that the television conference can be performed securely by deleting the data after the end of the television conference and protecting the access using the password.

### Functional configuration of relay apparatus

Next, a function of the relay apparatus 30 will be described. The relay apparatus 30 includes a communication unit 31, a state detection unit 32, a data quality checking unit 33, a changed quality management unit 34, a data quality changing unit 35, and a storage control unit 39. These respective units are functions realized when any one of the respective constituent elements illustrated in FIG. 4 operates according to a command from the CPU 501 according to a program stored in the ROM 502. Moreover, the relay apparatus 30 is constructed by the HD 504 and has a nonvolatile storage unit 3000 in which various items of data or information stored therein are maintained even when the relay apparatus 30 is turned off.

A changed quality management data base (DB) 3001 configured as a changed quality management table is constructed in the nonvolatile storage unit 3000. In the changed quality management table, an IP address of the terminal 10 as a relay destination of the image data and the quality of the image data that the relay apparatus 30 relays to the relay destination are managed in correlation.

Next, functional configurations of the relay apparatus 30 will be described in detail. In the following description, the respective units of the relay apparatus 30 are described together with the relation between the respective units of the relay apparatus 30 and main constituent elements for realizing the respective units among the respective constituent elements.

The communication unit 31 of the relay apparatus 30 is realized by the network I/F 509 and transmits and receives data to and from other terminals, apparatuses, or systems via the communication network 2. The state detection unit 32 is realized by a command from the CPU 501 and detects an operating state of the relay apparatus 30 having the state detection unit 32. "Online," "Offline," and "Failure" states are included in the operating state.

The data quality checking unit 33 is realized by a command from the CPU 501 and searches the changed quality management table using the IP address of the destination terminal as a search key to extract the quality of the corresponding image data to be relayed to thereby check the quality of the image data to be relayed. The changed quality management unit 34 is realized by a command from the CPU 501 and changes the content of the changed quality management table of the changed quality management DB 3001 based on quality information transmitted from the server apparatus 50.

The data quality changing unit 35 is realized by a command from the CPU 501 and changes the quality of the image data transmitted from the transmitting source terminals 10 and 20 based on the content of the changed quality management table of the changed quality management DB 3001. The storage control unit 39 is realized by the HDD 505 and performs processes of storing various items of data in the nonvolatile storage unit 3000 and reading various items of data stored in the nonvolatile storage unit 3000.

### Functional configuration of server apparatus

Next, a function of the server apparatus 50 will be described. The server apparatus 50 of the embodiment includes a communication unit 51, an authentication unit 52, a state management unit 53, a terminal extracting unit 54, a terminal state acquiring unit 55, a session management unit 57, a quality determining unit 58, a storage control unit 59, a delay management unit 60, and a destination determining unit 62. These respective units are functions realized when any one of the respective constituent elements illustrated in FIG. 4 operates according to a command from the CPU 501 according to a program stored in the ROM 502. Moreover, the server apparatus 50 has a nonvolatile storage unit 5000 constructed by the HD 504 in which various items of data or information stored therein are maintained even when the server apparatus 50 is turned off. Various items of information are stored in the nonvolatile storage unit 5000. Furthermore, the server apparatus 50 has a volatile storage unit 5100 constructed by the RAM 503.

### Relay apparatus management table

A relay apparatus management DB 5001 constructed by a relay apparatus management table is constructed in the nonvolatile storage unit 5000. In this relay apparatus management table, an operating state of each relay apparatus 30, a reception date and time on which the state information indicated by the operating state is received by the server apparatus 50, an IP address of the relay apparatus 30, and a largest data transmission speed (Mbps) of the relay apparatus 30 are managed in correlation with each relay apparatus ID for identifying the respective relay apparatuses 30.

### Authentication management table

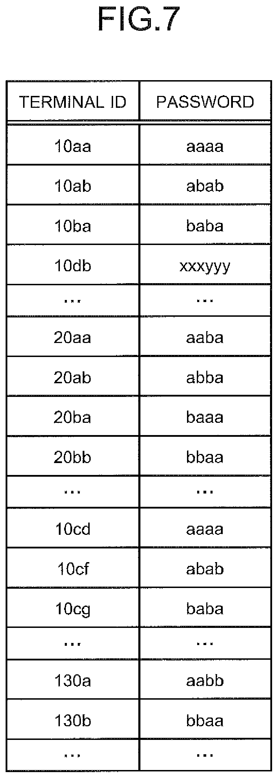

Furthermore, an authentication management DB 5002 configured by such an authentication management table as illustrated in FIG. 7 is constructed in the nonvolatile storage unit 5000. In this authentication management table, a password is managed in correlation with each terminal ID of all terminals 10, 20, and 130 managed by the server apparatus 50. The password is information used for authenticating the terminals 10, 20, and 130. In the example of FIG. 7, the password of the terminal 10 of the ID "10aa" is "aaaa".

In the present embodiment, although the case of using the terminal ID for identifying the terminals 10, 20, and 130 is described as an example, a user ID for identifying users may be used instead of the terminal ID.

### Terminal management table

A terminal management DB 5003 configured by a terminal management table is constructed in the nonvolatile storage unit 5000.

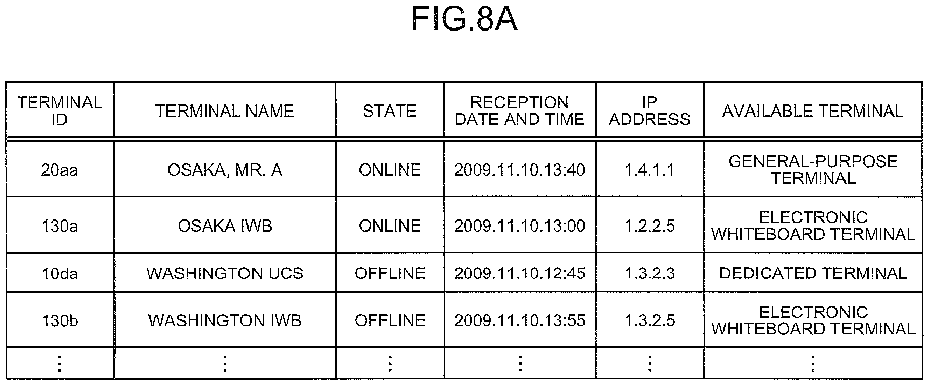

FIG. 8A is a diagram illustrating a first example of a terminal management table according to the embodiment. The terminal management table of the embodiment has a terminal ID, a terminal name, a state, a reception date and time, an IP address, and an available terminal. The terminal ID is identification information for identifying the terminals 10, 20, and 130. The terminal name is the name of the terminals 10, 20, and 130. The state is state information included in the presence information. The reception date and time is the date and time (the latest reception date and time) on which data (presence information or the like) that updates the terminal management table is received finally from the terminals 10, 20, and 130. The IP address is identification information for identifying the terminals 10, 20, and 130, and the communication network 2. The available terminal is available terminal information included in the presence information.

In the example of FIG. 8A, for a terminal 20aa having the terminal ID "20aa," for example, a terminal name is "Osaka, Mr. A," an operating state is "Online," the date and time on which presence information is received by the server apparatus 50 is "2009.11.10 13:40," an IP address is "1.4.1.1," and an available terminal is a "general-purpose terminal". The "general-purpose terminal" set to the available terminal indicates a subject terminal 20aa.

For example, for a terminal 130a having the terminal ID "130a," for example, a terminal name is "Osaka IWB," an operating state is "Online," the date and time on which the presence information is received by the server apparatus 50 is "2009.11.10 13:00," an IP address is "1.2.2.5," and an available terminal is an "electronic whiteboard terminal". The "electronic whiteboard terminal" set to the available terminal is a subject terminal 130a.

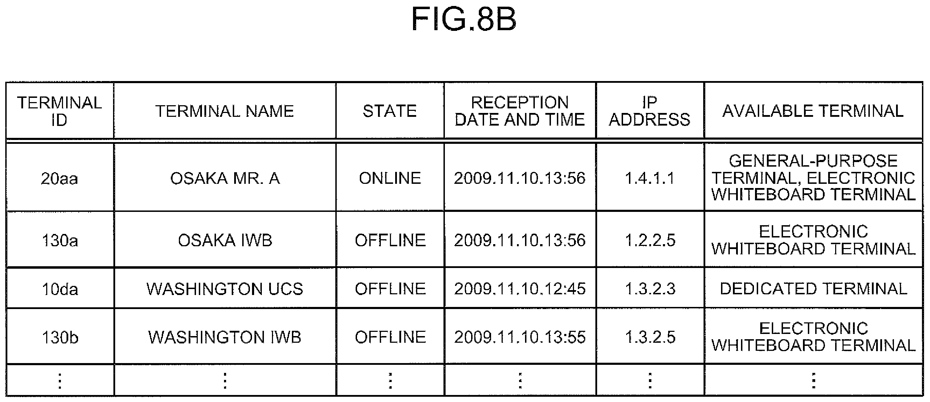

FIG. 8B is a diagram illustrating a second example of the terminal management table of the embodiment. The second example of FIG. 8B illustrates a case in which the collaboration unit 1-22 enables the terminals 20aa and 130a to collaborate with each other.

In the example of FIG. 8B, for a terminal 20aa having the terminal ID "20aa," the date and time on which presence information is received by the server apparatus 50 is updated from "2009.11.10 13:40" (see FIG. 8A) to "2009.11.10 13:56". Moreover, the available terminal of the terminal 20aa having the terminal ID "20aa" is updated from "general-purpose terminal" (see FIG. 8A) to "general-purpose terminal and electronic whiteboard terminal". The "electronic whiteboard terminal" added to the available terminal is the terminal 130 having the terminal ID "130a".

For a terminal 130a having the terminal ID "130a," the date and time on which presence information is received by the server apparatus 50 is updated from "2009.11.10 13:00" (see FIG. 8A) to "2009.11.10 13:56". Moreover, the state of the terminal 130a having the terminal ID "130a" is updated from "Online" (see FIG. 8A) to "Offline". This is because the terminal 130a is already used by the terminal 20aa. That is, the other terminals 10, 20, and 130 other than the terminal 20aa cannot use the terminal 130a.

### Destination list management table

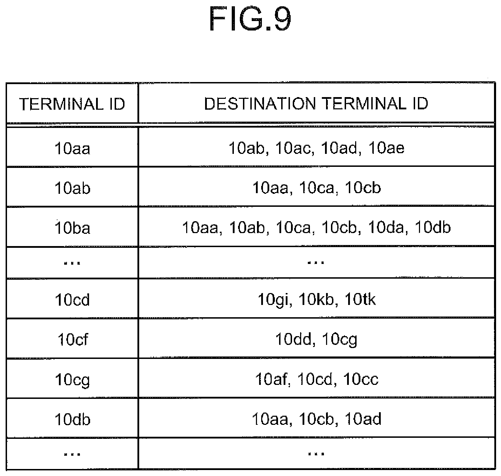

Furthermore, a destination list management DB 5004 configured by such a destination list management table as illustrated in FIG. 9 is constructed in the nonvolatile storage unit 5000. The destination list management table of the embodiment stores the terminals 10, 20, and 130 set as the destination terminal candidate of the terminal 10 (20, 130) for each terminal 10 (20, 130). The terminal ID is identification information for identifying the terminals 10, 20, and 130. The destination terminal ID is identification information for identifying the terminals 10, 20, and 130 set as the destination terminal candidate.

In the example of FIG. 9, the destination terminal candidate of the terminal 10aa having the terminal ID "l0aa," for example, includes a terminal 10ab having the terminal ID "10ab," a terminal 10ac having the terminal ID "10ac," a terminal 10ad having the terminal ID "10ad," and a terminal 10ae having the terminal ID "10ae".

### Session management table

A session management DB 5005 configured by a session management table is constructed in the nonvolatile storage unit 5000. In this session management table, a relay apparatus ID of the relay apparatus 30 used for relaying content data in a session in which content data is transmitted between terminals, a terminal ID of a start requesting terminal which is a transmitting source of start request information of the session, a terminal ID of a destination terminal designated as a counterpart of the start request information of the session, a delay (ms) in receiving when image data is received in the destination terminal, and the reception date and time on which delay information indicating the delay is transmitted from the destination terminal and is received by the server apparatus 50 are managed in correlation with each session ID for identifying the session.

### Quality management table

A quality management DB 5006 configured by a quality management table is constructed in the nonvolatile storage unit 5000. In this quality management table, the quality (image quality) of the image data relayed by the relay apparatus 30 is managed in correlation with the delay (ms) of the image data in the start requesting terminal or the destination terminal.

Next, the functional units of the server apparatus 50 will be described in detail. In the following description, the respective units of the server apparatus 50 will be described together with the relation between the respective units of the server apparatus 50 and main constituent elements for realizing the respective units among the respective constituent elements illustrated in FIG. 4.

The communication unit 51 is realized by the network I/F 509 and transmits and receives data to and from other terminals, apparatuses, or systems via the communication network 2. The communication unit 51 receives the presence information of the terminals 10, 20, and 130 from the terminals 10, 20, and 130, for example. Specifically, the communication unit 51 receives the presence information of the terminals 10, 20, and 130 from the terminals 10, 20, and 130 when the available terminal information of the terminals 10, 20, and 130 is changed, for example. Moreover, for example, when the state information of the terminals 10, 20, and 130 is changed, the communication unit 51 receives the presence information of the terminals 10, 20, and 130 from the terminals 10, 20, and 130.

For example, when the presence information of the terminals 10, 20, and 130 stored in the nonvolatile storage unit 5000 is updated, the communication unit 51 transmits the presence information of the terminals 10, 20, and 130 to the terminals 10, 20, and 130 (the terminals 10, 20, and 130 having the terminals 10, 20, and 130 as the destination terminal candidate) that can communicate with the terminals 10, 20, and 130.

The authentication unit 52 authenticates the terminals 10, 20, and 130 by searching the authentication management table of the nonvolatile storage unit 5000 using the terminal ID and the password included in the login request information received via the communication unit 51 as a search key and by determining whether the same terminal ID and password are managed by the authentication management table.

The state management unit 53 manages the terminal management table via the storage control unit 59. When the communication unit 51 receives a login request, a logoff request, and the like transmitted from the terminals 10, 20, and 130, for example, the state management unit 53 updates the terminal name, the state, the reception date and time, the IP address, and the available terminal correlated with the terminal ID of the terminals 10, 20, and 130 that transmitted the login request and the logoff request. The login request is transmitted from the terminals 10, 20, and 130 to the server apparatus 50 when the power of the terminals 10, 20, and 130 is turned on, for example. Moreover, the logoff request is transmitted from the terminals 10, 20, and 130 to the server apparatus 50 when the power of the terminals 10, 20, and 130 is turned off, for example.

The terminal extracting unit 54 extracts the destination terminal ID from the destination list management table via the storage control unit 59. When the destination list creation unit 1-20 of the terminals 10, 20, and 130 creates the destination list, for example, the terminal extracting unit 54 extracts the destination terminal ID for identifying the destination terminal candidate included in the destination list from the destination list management table.

The terminal state acquiring unit 55 acquires the presence information (the state information and the available terminal information) from the terminal management table via the storage control unit 59. For example, when the destination list creation unit 1-20 of the terminal 10, 20, and 130 creates the destination list, the terminal state acquiring unit 55 acquires the presence information of the destination terminal candidate included in the destination list from the terminal management table.

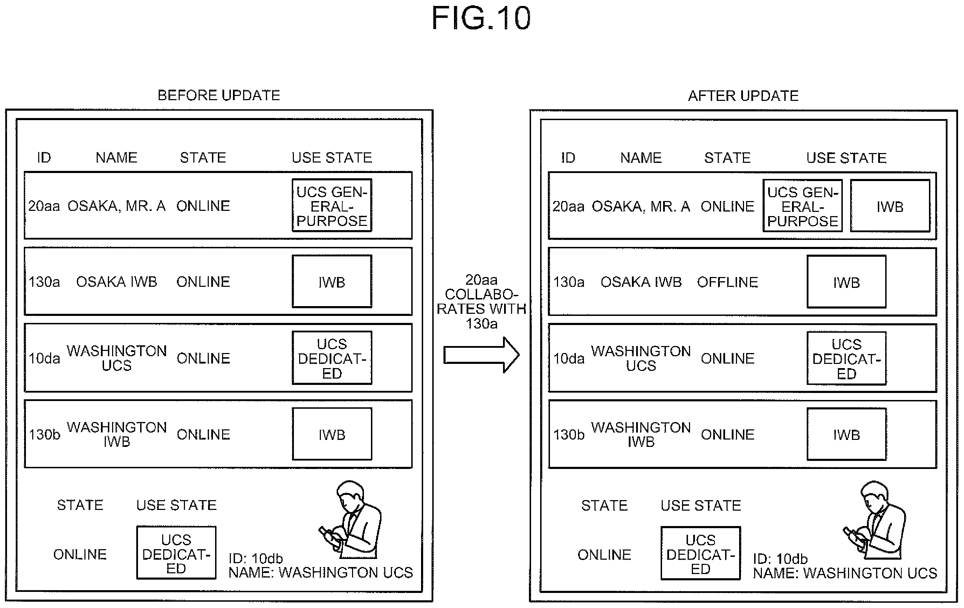

FIG. 10 is a diagram illustrating an example of the destination list including the presence information of the embodiment. The example of FIG. 10 illustrates the destination list displayed on the terminal 10dc. The destination list before update illustrated in FIG. 10 illustrates a destination list created when the terminal management table is in the state illustrated in FIG. 8A. Moreover, the destination list after update illustrated in FIG. 10 illustrates a destination list created when the terminal management table is in the state illustrated in FIG. 8B.

ID indicates the terminal ID of the terminals 10, 20, and 130 which are destination terminal candidates. Name indicates a terminal name of the destination terminal candidate. State indicates the destination terminal candidate state (the state information included in the presence information). Use state indicates the available terminal (the available terminal information included in the presence information) of the destination terminal candidate.

Icon "UCS dedicated" indicates the terminal dedicated for television conference 10. Icon "UCS general-purpose" indicates the general-purpose terminal 20. Icon "IWB" indicates the terminal 130 having recording and display functions. UCS is an abbreviation of unified communication system. IWB is an abbreviation of interactive whiteboard.

The example of FIG. 10 illustrates a case in which the terminal 20aa collaborates with the terminal 130a whereby the icon "IWB" is added to the use state of the terminal 20aa and the state of the terminal 130a is changed to the offline state.

The session management unit 57 manages a session ID generated by a session ID generation unit, a terminal ID of a requesting terminal, and a terminal ID of the destination terminal by storing the same in the session management table of the nonvolatile storage unit 5000 in correlation with each other. Moreover, the session management unit 57 manages the relay apparatus ID of one relay apparatus 30 selected finally for each session ID by storing the same in the session management table.

The quality determining unit 58 searches the quality management table using the delay as a search key and extracts the quality of the corresponding image data to thereby determine the quality of the image data to be relayed to the relay apparatus 30. The storage control unit 59 is realized by the HDD 505 and performs processes of storing various items of data in the nonvolatile storage unit 5000 and reading various items of data stored in the nonvolatile storage unit 5000. Furthermore, the storage control unit 59 performs processes of storing various items of data in the volatile storage unit 5100 and reading various items of data stored in the volatile storage unit 5100.

The delay management unit 60 searches the terminal management table using the IP address of the destination terminal as a search key to extract the corresponding terminal ID and manages the delay indicated by the delay information by storing the same in a field portion of the delay in the record in which the extracted terminal ID is included.

The destination determining unit 62 determines whether the destination terminal ID of the terminals 10 and 20 that request to participate is included in the destination terminal ID of the terminals 10 and 20 that participate in a session sed for the content data extracted by the terminal extracting unit 54 by referring to the destination list management table.

### Presence information update method

Next, an example of a presence information update method according to the embodiment will be described.

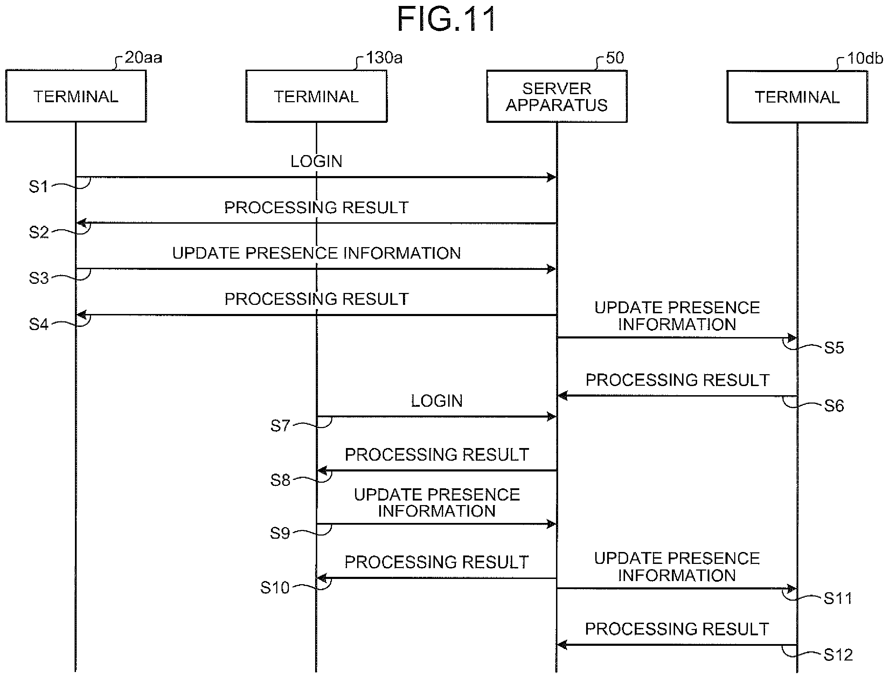

FIG. 11 is a sequence diagram illustrating a first example of the presence information update method of the embodiment.

First, the communication unit 11 of the terminal 20aa logs into the server apparatus 50 by transmitting login information, including a terminal ID and a password, to the server apparatus 50 (step S1).

Subsequently, when data identical to a combination of the terminal ID (20aa) and the password (aaba) included in the login information transmitted in step S1 is included in the authentication management DB 5002, the communication unit 51 of the server apparatus 50 transmits a processing result indicating a success in the login process to the terminal 20aa (step S2).

Subsequently, the communication unit 11 of the terminal 20aa updates the presence information of the terminal 20aa stored in the server apparatus 50 by transmitting the presence information including the terminal ID (20aa), the state (Online), and the terminal ID (20aa) indicating the available terminal to the server apparatus 50 (step S3).

Subsequently, when the update process of updating the terminal management DB 5003 succeeds with the presence information transmitted in step S 1, the communication unit 51 of the server apparatus 50 transmits a processing result indicating a success in the update process to the terminal 20aa (step S4). Subsequently, the communication unit 51 updates the presence information of the terminal 20aa displayed on the terminal 10db by transmitting the presence information of the terminal 20aa updated in step S3 to the terminal 10db (step S5).

Subsequently, when the update process of updating the presence information of the terminal 20aa displayed on the terminal 10db succeeds with the presence information transmitted in step S5, the communication unit 11 of the terminal 10db transmits a processing result indicating a success in the update process to the server apparatus 50 (step S6).

Subsequently, the communication unit 11 of the terminal 130a logs into the server apparatus 50 by transmitting login information including the terminal ID (130a) and the password (aabb) to the server apparatus 50 (step S7).

Subsequently, when data identical to a combination of the terminal ID (130a) and the password (aabb) included in the login information transmitted in step S7 is included in the authentication management DB 5002, the communication unit 51 of the server apparatus 50 transmits a processing result indicating a success in the login process to the terminal 130a (step S8).

Subsequently, the communication unit 11 of the terminal 130a updates the presence information of the terminal 130a stored in the server apparatus 50 by transmitting the presence information including the terminal ID (130a), the state (Online), and the terminal ID (130a) indicating the available terminal to the server apparatus 50 (step S9).

Subsequently, when the update process of updating the terminal management DB 5003 succeeds with the presence information transmitted in step S9, the communication unit 51 of the server apparatus 50 transmits a processing result indicating a success in the update process to the terminal 130a (step S10). Subsequently, the communication unit 51 updates the presence information of the terminal 130a displayed on the terminal 10db by transmitting the presence information of the terminal 130a updated in step S10 to the terminal 10db (step S11).

Subsequently, when the update process of updating the presence information of the terminal 130a displayed on the terminal 10db succeeds with the presence information transmitted in step S 11, the communication unit 11 of the terminal 10db transmits a processing result indicating a success in the update process to the server apparatus 50 (step S12).

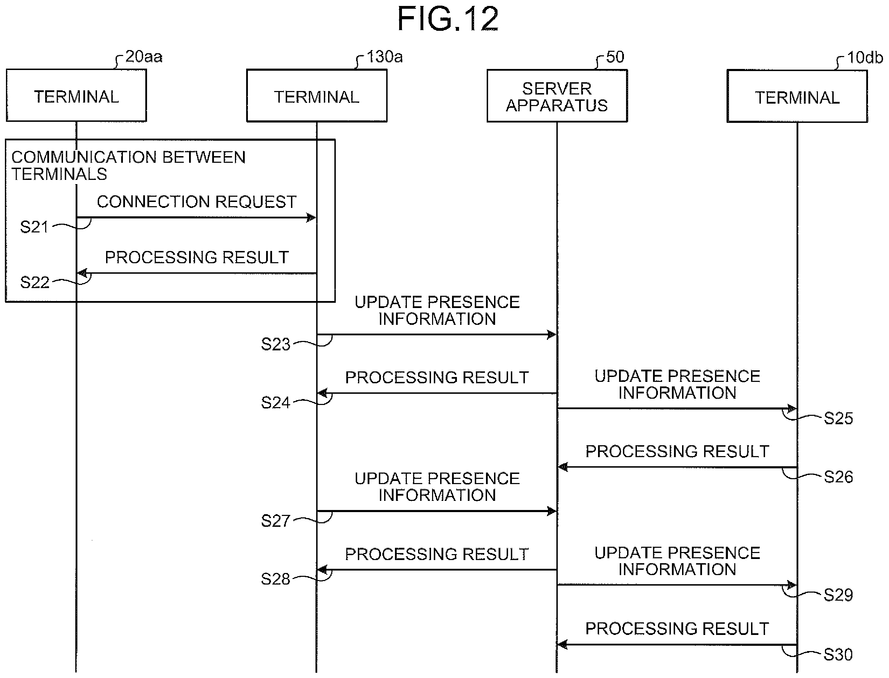

FIG. 12 is a sequence diagram illustrating a second example of the presence information update method according to the embodiment.

First, the communication unit 11 of the terminal 20aa transmits a connection request (pairing request) to the terminal 130a (step S21). A method of transmitting the connection request is arbitrary. The communication unit 11 of the terminal 20aa transmits the connection request to the terminal 130a via cable connection using the external I/F 204 or near-field radio communication using the NFC I/F 221 or the Bluetooth (registered trademark) I/F 222.

Subsequently, the communication unit 11 of the terminal 130a transmits a processing result indicating a success in the connection request transmitted in step S21 and available function information to the terminal 20aa (step S22). The available function information is information indicating new functions that the terminal 20aa has become possible to use by connecting to the terminal 130a.

Subsequently, the communication unit 11 of the terminal 130a updates the presence information of the terminal 130a stored in the server apparatus 50 by transmitting the presence information including the terminal ID (130a), the state (Offline), and the terminal ID (130a) indicating the available terminal to the server apparatus 50 (step S23).

Subsequently, when the update process of updating the terminal management DB 5003 succeeds with the presence information transmitted in step S23, the communication unit 51 of the server apparatus 50 transmits a processing result indicating a success in the update process to the terminal 130a (step S24). With the processes of steps S23 and S24, it is possible to allow the server apparatus 50 to understand that the terminal 130a is in a state such as an offline state due to a power-off event or the like.

Subsequently, the communication unit 51 updates the presence information of the terminal 130a displayed on the terminal 10db by transmitting the presence information of the terminal 130a updated in step S23 to the terminal 10db (step S25).

Subsequently, when the update process of updating the presence information of the terminal 130a displayed on the terminal 10db succeeds with the presence information transmitted in step S25, the communication unit 11 of the terminal 10db transmits a processing result indicating a success in the update process to the server apparatus 50 (step S26).

Subsequently, the communication unit 11 of the terminal 130a updates the presence information of the terminal 20aa stored in the server apparatus 50 by transmitting the presence information including the terminal ID (20aa), the state (Online), and the terminal ID (20aa, 130a) indicating the available terminal to the server apparatus 50 (step S27). The presence information transmitted in step S27 indicates that the terminal 20aa has become possible to use new functions of the terminal 130a connected to the terminal 20aa by the processes of steps S21 and S22.

Subsequently, when the update process of updating the terminal management DB 5003 succeeds with the presence information transmitted in step S27, the communication unit 51 of the server apparatus 50 transmits a processing result indicating a success in the update process to the terminal 130a (step S28). With the processes of steps S27 and S28, it is possible to allow the server apparatus 50 to understand that the terminal 20aa can use the terminal 130a.

Subsequently, the communication unit 51 updates the presence information of the terminal 20aa displayed on the terminal 10db by transmitting the presence information of the terminal 20aa updated in step S28 to the terminal 10db (step S29).

Subsequently, when the update process of updating the presence information of the terminal 20aa displayed on the terminal 10db succeeds with the presence information transmitted in step S29, the communication unit 11 of the terminal 10db transmits a processing result indicating a success in the update process to the server apparatus 50 (step S30).

The processes of steps S23 and S27 may be performed by the terminal 20aa. The presence information transmitted in steps S23 and S27 may be transmitted to the server apparatus 50 by one transmission.

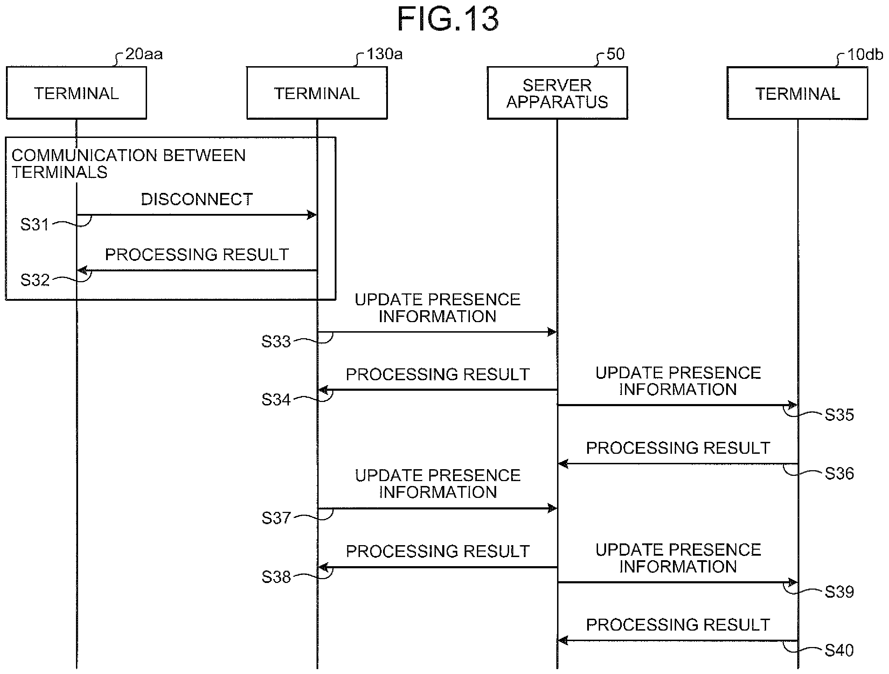

FIG. 13 is a sequence diagram illustrating a third example of the presence information update method of the embodiment. The example of FIG. 13 illustrates a presence information update method when communication between the terminals 20aa and the terminals 130a connected by the process of the sequence diagram illustrated in FIG. 12 is disconnected.

First, the communication unit 11 of the terminal 20aa transmits a disconnection request to the terminal 130a (step S31).

Subsequently, the communication unit 11 of the terminal 130a transmits a processing result indicating a success in the disconnection request transmitted in step S31 to the terminal 20aa (step S32).

Subsequently, the communication unit 11 of the terminal 130a updates the presence information of the terminal 20aa stored in the server apparatus 50 by transmitting the presence information including the terminal ID (20aa), the state (Offline), and the terminal ID (20aa) indicating the available terminal to the server apparatus 50 (step S33).

Subsequently, when the update process of updating the terminal management DB 5003 succeeds with the presence information transmitted in step S33, the communication unit 51 of the server apparatus 50 transmits a processing result indicating a success in the update process to the terminal 130a (step S34). With the processes of steps S33 and S34, it is possible to allow the server apparatus 50 to understand that the available terminal of the terminal 20aa is a subject terminal only.

Subsequently, the communication unit 51 updates the presence information of the terminal 20aa displayed on the terminal 10db by transmitting the presence information of the terminal 20aa updated in step S34 to the terminal 10db (step S35).

Subsequently, when the update process of updating the presence information of the terminal 20aa displayed on the terminal 10db succeeds with the presence information transmitted in step S35, the communication unit 11 of the terminal 10db transmits a processing result indicating a success in the update process to the server apparatus 50 (step S36).

Subsequently, the communication unit 11 of the terminal 130a updates the presence information of the terminal 130a stored in the server apparatus 50 by transmitting the presence information including the terminal ID (130a), the state (Online), and the terminal ID (130a) indicating the available terminal to the server apparatus 50 (step S37).

Subsequently, when the update process of updating the terminal management DB 5003 succeeds with the presence information transmitted in step S37, the communication unit 51 of the server apparatus 50 transmits a processing result indicating a success in the update process to the terminal 130a (step S38). With the processes of steps S37 and S38, it is possible to allow the server apparatus 50 to understand that the terminal 130a has entered the online state again.

Subsequently, the communication unit 51 updates the presence information of the terminal 130a displayed on the terminal 10db by transmitting the presence information of the terminal 130a updated in step S37 to the terminal 10db (step S39).

Subsequently, when the update process of updating the presence information of the terminal 130a displayed on the terminal 10db succeeds with the presence information transmitted in step S39, the communication unit 11 of the terminal 10db transmits a processing result indicating a success in the update process to the server apparatus 50 (step S40).

The processes of steps S33 and S37 may be performed by the terminal 20aa. The presence information transmitted in steps S33 and S37 may be transmitted to the server apparatus 50 by one transmission.

As described above, in the server apparatus 50 of the embodiment, the nonvolatile storage unit 5000 stores the presence information including the state information indicating the state of the terminal 10 (20, 130) and the available terminal information indicating the available terminal that is usable from the terminal 10 (20, 130), for each terminal 10 (20, 130). Moreover, the communication unit 51 receives the presence information of the terminal 10 (20, 130) from the terminal 10 (20, 130). Upon receiving the presence information of the terminal 10 (20, 130) from the terminal 10 (20, 130), the state management unit 53 updates the presence information of the terminal 10 (20, 130) stored in the nonvolatile storage unit 5000.

According to the server apparatus 50 of the embodiment, it is possible to inform a communication counterpart user of the fact that a plurality of client terminals is usable.

According to exemplary embodiments of the present invention, it is possible to inform a communication counterpart user of the fact that a plurality of client terminals is usable.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

The method steps, processes, or operations described herein are not to be construed as necessarily requiring their performance in the particular order discussed or illustrated, unless specifically identified as an order of performance or clearly identified through the context. It is also to be understood that additional or alternative steps may be employed.

Further, any of the above-described apparatus, devices or units can be implemented as a hardware apparatus, such as a special-purpose circuit or device, or as a hardware/software combination, such as a processor executing a software program.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, nonvolatile memory, semiconductor memory, read-only-memory (ROM), etc.

Alternatively, any one of the above-described and other methods of the present invention may be implemented by an application specific integrated circuit (ASIC), a digital signal processor (DSP) or a field programmable gate array (FPGA), prepared by interconnecting an appropriate network of conventional component circuits or by a combination thereof with one or more conventional general purpose microprocessors or signal processors programmed accordingly.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA) and conventional circuit components arranged to perform the recited functions.

## Claims

1. A server apparatus comprising:
a storage unit that stores, for each terminal, presence information including state information indicating a state of a terminal and available terminal information indicating an available terminal that is usable from the terminal;
a server communication unit that receives, from a first terminal, the presence information of the first terminal; and
a state management unit that updates the presence information of the first terminal stored in the storage unit upon receiving the presence information of the first terminal from the first terminal.

2. The server apparatus according to claim 1, wherein
the server communication unit transmits the presence information of the first terminal to a second terminal that can communicate with the first terminal when the presence information of the first terminal stored in the storage unit is updated.

3. The server apparatus according to claim 1 or 2, wherein
the server communication unit receives the presence information of the first terminal from the first terminal when the available terminal information of the first terminal is changed.

4. The server apparatus according to any one of claims 1 to 3, wherein
the server communication unit receives the presence information of the first terminal from the first terminal when the state information of the first terminal is changed.

5. A transmission system comprising:
a server apparatus; and
a plurality of terminal, wherein
the server apparatus includes:
a storage unit that stores, for each terminal, presence information including state information indicating a state of a terminal and available terminal information indicating an available terminal that is usable from the terminal;
a server communication unit that receives, from a first terminal, the presence information of the first terminal; and
a state management unit that updates the presence information of the first terminal stored in the storage unit upon receiving the presence information of the first terminal from the first terminal, and
the first terminal includes a terminal communication unit that transmits the presence information of the first terminal.

6. The transmission system according to claim 5, wherein
the server communication unit transmits the presence information of the first terminal to a second terminal that can communicate with the first terminal when the presence information of the first terminal stored in the storage unit is updated.

7. The transmission system according to claim 5 or 6, wherein
the server communication unit receives the presence information of the first terminal from the first terminal when the available terminal information of the first terminal is changed.
